# EUROPÄISCHE PATENTSCHRIFT

(11) **EP 3 803 197 B1**
(45) Veröffentlichungstag und Bekanntmachung des Hinweises auf die Patenterteilung: **23.08.2023**
(21) Anmeldenummer: 19729481.2
(22) Anmeldetag: 03.06.2019
(51) Int. Cl.: F21S 41/145, F21S 41/153, F21S 41/24, F21S 41/255, F21S 41/275, B60Q 1/28, B60Q 1/00

(54) **KRAFTFAHRZEUGSCHEINWERFER MIT MINDESTENS ZWEI LICHTMODULEN**
MOTOR VEHICLE HEADLAMP WITH AT LEAST TWO LIGHT MODULES
PHARE DE VEHICULE AUTOMOBILE COMPORTANT AU MOINS DEUX MODULES D'ECLAIRAGE

(30) Priorität: 08.06.2018 DE 102018113768
(43) Veröffentlichungstag der Anmeldung: 14.04.2021
(73) Patentinhaber: Marelli Automotive Lighting Reutlingen (Germany) GmbH, 72762 Reutlingen (DE)
(72) Erfinder: KRATZER, Markus, 72762 Reutlingen (DE); SCHOLL, Michael, 72762 Reutlingen (DE); STRAHL-SCHÄFER, Stephanie, 72762 Reutlingen (DE)
(74) Vertreter: Wörz, Volker Alfred
(86) Internationale Anmeldenummer: PCT/EP2019/064361
(87) Internationale Veröffentlichungsnummer: WO 2019/233953

(56) Entgegenhaltungen:
- EP-A1- 2 119 956
- EP-A2- 1 342 616
- EP-A2- 2 784 376
- DE-A1- 19 602 168
- DE-A1-102007 005 779
- KR-A- 20150 072 620
- US-A1- 2016 046 340
- US-A1- 2017 205 043
- US-B2- 9 328 889

## Beschreibung

Die vorliegende Erfindung betrifft einen Kraftfahrzeugscheinwerfer mit mindestens zwei Lichtmodulen. Der Scheinwerfer ist zur Erzeugung zumindest einer abgeblendeten Lichtfunktion in einer Lichtaustrittsrichtung des Scheinwerfers ausgebildet.

Aus dem Stand der Technik sind verschiedene Kraftfahrzeugscheinwerfer bekannt, die mindestens zwei Lichtmodule aufweisen, die entweder alleine oder in unterschiedlichen Kombinationen miteinander zur Erzeugung unterschiedlicher Lichtfunktionen des Scheinwerfers ausgebildet sind. In einem besonders einfachen Fall ist eines der Lichtmodule zur Erzeugung einer Abblendlichtverteilung und ein anderes der Lichtmodule zur Erzeugung einer Fernlichtverteilung ausgebildet. Es sind aber auch Kraftfahrzeugscheinwerfer bekannt, bei denen ein erstes Lichtmodul einen ersten Teil einer Lichtverteilung (z.B. eine Abblendlicht-Grundlichtverteilung) und ein anderes Lichtmodul einen zweiten Teil der Lichtverteilung (z.B. eine Abblendlicht-Spotlichtverteilung) erzeugt. Die Lichtmodule können als Reflexionsmodul oder als Projektionsmodul ausgebildet sein. Zudem ist es bekannt, in die Lichtmodule zusätzliche Optikelemente (z.B. zusätzliche Lichtquellen, Primäroptiken, Lichtleiter) zu integrieren, um mit demselben Lichtmodul unterschiedliche Lichtfunktionen erzeugen zu können. In diesem Zusammenhang wird beispielhaft auf die EP 2 159 481 A1 und die DE 101 01 795 A1 verwiesen.

Die EP 2 159 481 A1 offenbart eine Beleuchtungseinrichtung für ein Kraftfahrzeug, die eine erste Lichtquelle und einen Reflektor zur Erzeugung einer abgeblendeten Lichtverteilung (z.B. Abblendlicht oder Nebellicht) sowie zweite Lichtquellen umfasst, die im Zusammenwirken mit einer Lichtleiterplatte eine Signallichtfunktion (z.B. Tagfahrlicht oder Begrenzungslicht) erzeugen. Aus der DE 101 01 795 A1 ist eine Blinkleuchte für ein Kraftfahrzeug bekannt, die eine erste Lichtquelle und einen Reflektor zur Erzeugung des Blinklichts sowie eine zweite Lichtquelle umfasst, die im Zusammenwirken mit einer Lichtleiterplatte, die im Strahlengang des Blinklichts angeordnet ist, ein Begrenzungslicht erzeugt.

Des Weiteren ist es bei Kraftfahrzeugscheinwerfern mit mehreren Lichtmodulen aus dem Stand der Technik bekannt, wenn eines der Lichtmodule eine bestimmte Lichtfunktion des Scheinwerfers (z.B. eine Abblendlichtverteilung) erzeugt, auch die anderen Lichtmodule des Scheinwerfers zumindest mit geringerer Intensität zu aktivieren, damit für einen Betrachter bei einem Blick in den Scheinwerfer entgegen der Lichtaustrittsrichtung des Scheinwerfers alle Lichtmodule in etwa gleich hell ausgeleuchtet erscheinen. In diesem Zusammenhang wird beispielhaft auf die DE 10 2012 208 516 A1 verwiesen.

Die DE 10 2012 208 516 A1 offenbart einen Kraftfahrzeugscheinwerfer mit zwei Lichtmodulen, einem sogenannten Abblendlichtmodul und einem Erscheinungslichtmodul, das einen kreisringförmigen Lichtleiter umfasst, der um einen äußeren Rand eines Reflektors oder einer Projektionslinse des Abblendlichtmoduls oder eines anderen Lichtmoduls des Scheinwerfers verläuft. Zur Erzeugung einer Abblendlichtverteilung des Scheinwerfers sind sowohl das Abblendlichtmodul als auch das Erscheinungslichtmodul aktiviert, wobei das Abblendlichtmodul weniger als 15 %, vorzugsweise weniger als 5 %, der durch den Scheinwerfer hinsichtlich der vertikalen Ausrichtung oberhalb der Helldunkelgrenze emittierten Lichtstärke erzeugt und das Erscheinungslichtmodul im Gegenzug mehr als 80 %, vorzugsweise mehr als 90 %, der durch den Scheinwerfer hinsichtlich der vertikalen Ausrichtung oberhalb der Helldunkelgrenze emittierten Lichtstärke erzeugt. Zudem kann durch das Erscheinungslichtmodul eine Tagfahrlichtverteilung erzeugt werden, wobei das Abblendlichtmodul dann deaktiviert ist. Ziel ist es dabei, dass das Erscheinungsbild des Scheinwerfers für einen Betrachter, der entgegen der Lichtaustrittsrichtung in den Scheinwerfer sieht, stets durch das Erscheinungslichtmodul geprägt wird, so dass sich sowohl im Abblendlichtmodus des Scheinwerfers als auch im Tagfahrlichtmodus das "Angel Eyes" genannte Scheinwerferdesign mit beleuchteten Ringen ergibt. Zur konkreten technischen Realisierung des bekannten Scheinwerfers sind in dieser Druckschrift keine Ausführungen gemacht.

Bei einem Scheinwerfer mit mehreren Lichtmodulen ist es wünschenswert, dass beim Betrieb des Scheinwerfers alle Module für den Betrachter von außen ähnlich aussehen. Ziel ist es dabei, unabhängig davon, welches der Lichtmodule des Scheinwerfers eine abgeblendete Lichtverteilung erzeugt, dem Betrachter stets den Eindruck zu vermitteln, dass alle Lichtmodule des Scheinwerfers in etwa gleich hell leuchten. Dieser Eindruck des Betrachters wird im Wesentlichen durch das in die entblendete Zone oberhalb der Helldunkelgrenze der abgeblendeten Lichtverteilung gesandte Licht geprägt, da sich die Augen des Betrachters in der Regel in dieser Zone befinden.

Am Beispiel eines Scheinwerfers, der ein Abblendlichtmodul und ein Fernlichtmodul aufweist, ist das Abblendlichtmodul aktiviert und das Fernlichtmodul deaktiviert, wenn der Scheinwerfer ein Abblendlicht erzeugt. Trotzdem ist es wünschenswert, dass auch das Fernlichtmodul für einen Betrachter in etwa gleich hell und ähnlich illuminiert erscheint wie das Abblendlichtmodul. Um bei einem als Projektionsmodul ausgebildeten Fernlichtmodul eine illuminierte Projektionslinse zu generieren, wurde bei bisher im Stand der Technik angewandten Lösungen kein reines Fernlichtmodul eingesetzt, sondern ein Bi-Funktionsmodul (für Abblendlicht und Fernlicht), das auch einen Teil des Abblendlichts generiert, wodurch sich allerdings folgende Nachteile ergeben:
- zusätzlicher Teilebedarf im Bi-Funktionsmodul: Spiegelblende, präzise Einstellmechanik im Fernlichtmodul, LEDs, Kühlkörper,
- zusätzlicher Fertigungsaufwand: präzise Einstellung von zwei Lichtmodulen (Abblendlichtmodul und Bi-Funktionsmodul), die an der Erzeugung des Abblendlichts beteiligt sind,
- inhomogenes Erscheinungsbild: unzureichende Ausleuchtung der Projektionslinse des Bi-Funktionsmoduls,
- hoher Energieverbrauch, hoher Wärmeeintrag.

Ein gattungsgemäßer Scheinwerfer ist aus der EP 1 342 616 A2 bekannt. Ähnliche Scheinwerfer sind bspw. aus der EP 2 119 956 A1 oder der US9,328,889 B2 bekannt.

Ausgehend von dem beschriebenen Stand der Technik liegt der vorliegenden Erfindung die Aufgabe zugrunde, bei einem Scheinwerfer mit mehreren Lichtmodulen während der Aktivierung eines der Lichtmodule auch das oder die anderen Lichtmodule derart auszuleuchten, dass einem Beobachter, der sich in der entblendeten Zone vor dem Kraftfahrzeug befindet (d.h. über einer oberen etwa horizontalen Helldunkelgrenze und/oder in einem dunkleren Bereich neben einer etwa vertikalen Helldunkelgrenze), bei einem Blick entgegen der Lichtaustrittsrichtung des Scheinwerfers alle Lichtmodule in etwa gleich hell erscheinen.

Zur Lösung dieser Aufgabe wird ein Kraftfahrzeugscheinwerfer mit den Merkmalen des Anspruchs 1 vorgeschlagen. Insbesondere wird vorgeschlagen, dass mindestens ein Hauptlichtmodul des Scheinwerfers zur Erzeugung einer abgeblendeten Hauptlichtfunktion mit einer im Wesentlichen horizontalen Helldunkelgrenze ausgebildet ist und dass mindestens ein Nebenlichtmodul des Scheinwerfers zur Erzeugung zweier individuell ansteuerbarer Lichtfunktionen ausgebildet ist, nämlich einer Hauptlichtfunktion und einer weniger lichtstarken Zusatzlichtfunktion. Zur Erzeugung der abgeblendeten Lichtfunktion des Scheinwerfers ist die abgeblendete Hauptlichtfunktion des mindestens einen Hauptlichtmoduls aktiviert und die Hauptlichtfunktion des mindestens einen Nebenlichtmoduls deaktiviert oder nur so aktiviert, dass das mindestens eine Nebenlichtmodul entgegen der Lichtaustrittsrichtung des Scheinwerfers ohne eine Aktivierung der Zusatzlichtfunktion des mindestens einen Nebenlichtmoduls für einen Betrachter dunkler erscheint als das mindestens eine Hauptlichtmodul. Bei Erzeugung der abgeblendeten Lichtfunktion des Scheinwerfers ist zusätzlich die Zusatzlichtfunktion des mindestens einen Nebenlichtmoduls aktiviert, so dass das mindestens eine Nebenlichtmodul entgegen der Lichtaustrittsrichtung des Scheinwerfers für einen Betrachter heller erscheint als ohne die Zusatzlichtfunktion. Das mindestens eine Nebenlichtmodul weist zur Erzeugung der Zusatzlichtfunktion eine Lichtleiterplatte auf, in die mindestens eine Lichtquelle, die nicht zur Erzeugung der Hauptlichtfunktion des mindestens einen Nebenlichtmoduls dient, Licht einkoppelt, das in der Lichtleiterplatte mittels Totalreflexion propagiert, wobei die Lichtleiterplatte Auskoppelelemente zum Auskoppeln des propagierenden Lichts aus der Lichtleiterplatte über eine Lichtaustrittsfläche der Lichtleiterplatte aufweist. Das aus der Lichtleiterplatte ausgekoppelte Licht leuchtet einen Bereich oberhalb der Helldunkelgrenze der abgeblendeten Hauptlichtfunktion des mindestens einen Hauptlichtmoduls aus.

Das mindestens eine Hauptlichtmodul ist ausgebildet, eine abgeblendete Hauptlichtfunktion in Form einer Abblendlichtverteilung zu erzeugen, und das mindestens eine Nebenlichtmodul ist ausgebildet ist, eine Hauptlichtfunktion in Form einer Fernlichtverteilung zu erzeugen. Die Zusatzlichtfunktion leuchtet das Nebenlichtmodul aus, damit für einen Betrachter, der sich in einer entblendeten Zone vor dem Kraftfahrzeug befindet, die sich oberhalb einer oberen, etwa horizontalen Helldunkelgrenze und/oder in einem dunkleren Bereich neben einer etwa vertikalen Helldunkelgrenze erstreckt, in einer Blickrichtung entgegen der Lichtaustrittsrichtung der Eindruck entsteht, dass das Hauptlichtmodul und das Nebenlichtmodul in etwa gleich hell leuchten.

Das bedeutet, wenn ein Nebenlichtmodul des Scheinwerfers bei Realisierung einer abgeblendeten Lichtfunktion des Scheinwerfers durch Aktivierung der abgeblendeten Hauptlichtfunktion des Hauptlichtmoduls von vorne in der entblendeten Zone (oberhalb der Helldunkelgrenze) wesentlich dunkler als das Hauptlichtmodul erscheint, dieses dunklere oder bezüglich seiner Hauptlichtfunktion ausgeschaltete Nebenlichtmodul mit geringen Intensitäten der Zusatzlichtfunktion des Nebenlichtmoduls erhellt wird, ohne einen Betrachter zu blenden. Insbesondere wird dadurch das Nacht-Erscheinungsbild eines sich bezüglich seiner Hauptlichtfunktion nicht in Betrieb befindlichen Nebenlichtmoduls dem des Hauptlichtmoduls nachempfunden. Die Lichtleiterplatte ist derart ausgestaltet, dass die Leuchtdichte über die Lichtaustrittsfläche möglichst homogen verteilt ist. Zu diesem Zweck kann zumindest bereichsweise auf der Lichtaustrittsfläche eine Streustruktur ausgebildet sein, durch die das ausgekoppelte Licht in horizontaler und/oder vertikaler Richtung gestreut wird.

Die Fernlichtverteilung umfasst insbesondere eine Streifen- oder Block-Fernlichtverteilung, die in einem Fernbereich oberhalb der Helldunkelgrenze der abgeblendeten Hauptlichtfunktion des mindestens einen Hauptlichtmoduls mindestens zwei individuell ansteuerbare und ausleuchtbare, in horizontaler Richtung nebeneinander angeordnete Streifen oder Blocksegmente aufweist, wobei diese Segmente in der Regel Teil einer Anzahl von Streifen- oder Blocksegmenten mit jeweils ca. 0,5° - 10° horizontaler Breite sind, die nebeneinander angeordnet den Fernlichtbereich, vorzugsweise oberhalb der horizontalen Helldunkelgrenze, vor dem Fahrzeug abdecken. Diese mindestens zwei Segmente sind in diesem speziellen Fernlichtmodus des Scheinwerfers in der Regel aktiviert und können in Abhängigkeit von Position und Anzahl von vor dem Kraftfahrzeug befindlichen anderen Verkehrsteilnehmern gezielt aktiviert, gedimmt oder deaktiviert werden, um eine Blendung der anderen Verkehrsteilnehmer zu verhindern. Die anderen Verkehrsteilnehmer werden mittels geeigneter Sensoren im Kraftfahrzeug, bspw. mittels einer oder mehrerer Kameras, Radarsensoren, Ultraschallsensoren oder dergleichen, und durch Auswerten der Sensorsignale in einer Verarbeitungseinheit des Kraftfahrzeugs detektiert. In Abhängigkeit von der Position und Anzahl der detektierten Verkehrsteilnehmer werden Ansteuersignale für das Nebenlichtmodul, insbesondere für Lichtquellen zur Erzeugung der Hauptlichtfunktion des Nebenlichtmoduls, generiert, um die einzelnen Streifen oder Blocksegmente gezielt zu aktivieren, dimmen oder zu deaktivieren.

Gemäß einer bevorzugten Ausführungsform der vorliegenden Erfindung sind Lichtquellen zur Erzeugung der Hauptlichtfunktion und der Zusatzlichtfunktion des mindestens einen Nebenlichtmoduls als Halbleiterlichtquellen, insbesondere als Leuchtdioden oder als Laserdioden, ausgebildet und auf einer gemeinsamen Platine angeordnet. Somit sind alle Halbleiterlichtquellen des Nebenlichtmoduls auf einer gemeinsamen Platine angeordnet und kontaktiert. Es genügt somit ein gemeinsamer Kühlkörper für alle Halbleiterlichtquellen, und die Montage des Lichtmoduls wird erheblich erleichtert. Die Anordnung der Lichtquellen zur Erzeugung der Zusatzlichtfunktion des Nebenlichtmoduls auf der Platine wird insbesondere durch die Verwendung einer in geeigneter Weise ausgestalteten Lichtleiterplatte, insbesondere mit Umlenkprismen, für die Erzeugung der Zusatzlichtfunktion ermöglicht. Vorzugsweise weist das Nebenlichtmodul Lichtquellen zur Erzeugung der Zusatzlichtfunktion in geringerer Anzahl und/oder mit geringerer Leistung als Lichtquellen zur Erzeugung der Hauptlichtfunktion auf.

Vorteilhafterweise ist das mindestens eine Nebenlichtmodul als ein Projektionsmodul mit mindestens einer abbildenden Sekundäroptik ausgebildet, wobei Haupt-Lichtabstrahlrichtungen der Lichtaustrittsflächen von Lichtquellen zur Erzeugung der Hauptlichtfunktion des mindestens einen Nebenlichtmoduls oder die Haupt-Lichtabstrahlrichtungen der Lichtaustrittsflächen von diesen Lichtquellen zugeordneten Primäroptiken vorzugsweise zu der Sekundäroptik weisen und im Bereich einer Fokalebene der mindestens einen Sekundäroptik angeordnet sind. Die Austrittsflächen der Lichtquellen bzw. der Primäroptiken werden durch die Sekundäroptik auf der Fahrbahn vor dem Kraftfahrzeug abgebildet. Die Primäroptiken dienen zum Bündeln und Formen des von den Lichtquellen ausgesandten Lichts. Sie sind bspw. als lichtbrechende und totalreflektierende Vorsatzoptiken, Linsen oder Reflektoren ausgebildet. Vorzugsweise ist die Sekundäroptik des Nebenlichtmoduls als eine Projektionslinse ausgebildet. Besonders bevorzugt ist es, wenn das Hauptlichtmodul und das Nebenlichtmodul als Projektionsmodule ausgebildet sind. Dabei wird vorgeschlagen, dass durch die Zusatzlichtfunktion des Nebenlichtmoduls die gesamte Sekundäroptik, welche eine Zwischenlichtverteilung aus der Fokalebene auf die Fahrbahn vor das Kraftfahrzeug projiziert, insbesondere die gesamte Eintrittsfläche der Projektionslinse, ausgeleuchtet wird. Dafür wird in der Regel eine möglichst gleichmäßige Ausleuchtung der Eintrittsfläche angestrebt. Ganz besonders bevorzugt ist es, wenn sowohl die Hauptlichtfunktion als auch die Zusatzlichtfunktion jeweils eine Eintrittsfläche der Projektionslinse vollständig ausleuchten.

Gemäß einer anderen vorteilhaften Weiterbildung der Erfindung wird vorgeschlagen, dass die Lichtaustrittsfläche der Lichtleiterplatte im Bereich der Fokalebene der Sekundäroptik angeordnet ist. Die Lichtaustrittsfläche wird über die Sekundäroptik auf der Fahrbahn vor dem Kraftfahrzeug abgebildet. Des Weiteren wird vorgeschlagen, dass die Lichtaustrittsfläche der Lichtleiterplatte in einem geringen vertikalen Abstand bezüglich einer Horizontalebene des Nebenlichtmoduls, welche die optische Achse des Nebenlichtmoduls enthält, angeordnet ist, vorzugsweise direkt unterhalb der Lichtquellen zur Erzeugung der Hauptlichtfunktion. Besonders bevorzugt sind die Lichtquellen zur Erzeugung der Hauptlichtfunktion des Nebenlichtmoduls in vertikaler Richtung betrachtet im Bereich dieser Horizontalebene angeordnet und die Lichtquellen zur Erzeugung der Zusatzlichtfunktion sowie die Lichtleiterplatte unterhalb dieser Horizontalebene angeordnet.

Gemäß einer anderen bevorzugten Ausführungsform der Erfindung wird vorgeschlagen, dass die Sekundäroptik zumindest bereichsweise Streustrukturen zum Streuen des abgebildeten Lichts in horizontaler und/oder vertikaler Richtung aufweist. Wenn die Sekundäroptik als eine Projektionslinse ausgebildet ist, können Streustrukturen auf der Lichteintritts- und/oder der Lichtaustrittsfläche der Linse ausgebildet sein. Diese Streustrukturen beeinflussen die Lichtbündel beider Lichtfunktionen derart, dass die Abbildung beider Funktionen in horizontaler und/oder vertikaler Richtung verwischt wird. Die Streustruktur homogenisiert und weitet die jeweilige Lichtverteilung bzw. die gegebenenfalls vorhandenen Lichtstreifen oder -blocksegmente in horizontaler und/oder vertikaler Richtung in einem jeweils festgelegten Maße. Die Streustruktur kann auch asymmetrisch streuen, so dass der Schwerpunkt des Lichtes etwas verschoben wird, dieses dann eher vertikal nach oben oder unten. Die Streuung hat den Vorteil, dass die zusätzliche Illumination des Nebenlichtmoduls durch die Zusatzlichtfunktion aus verschiedenen Betrachtungsrichtungen von außen ähnlich gut sichtbar ist. Insbesondere bei einer Ausgestaltung der Hauptlichtfunktion des Nebenlichtmoduls als Streifen- oder Blockfernlicht ist es vorteilhaft, dass sich auf einem Messschirm vor dem Kraftfahrzeug horizontal benachbarte Fernlichtstreifen oder Fernlichtblocksegmente etwas, aber nicht vollständig überlappen und vertikal homogen ausgeleuchtete Streifen oder Blocksegmente entstehen. Die Streustruktur streut dann also horizontal maximal in etwa eine halbe Streifen-/ Blocksegmentbreite in beide Richtungen. Die vertikale Streuung kann dabei stärker ausgeführt sein, so dass Streifen oder Blocksegmente mit einer gewünschten Vertikalausdehnung entstehen. Die Streustruktur kann in vertikaler Richtung auch hier asymmetrisch streuen, so dass der Schwerpunkt des Lichts etwas nach oben oder unten verschoben wird. Insbesondere kann die Streustruktur zum Abblenden des abgebildeten Lichts nach unten ausgebildet sein. Dadurch kann der Wirkungsbereich des Scheinwerfers nach unten vergrößert werden. Die Streustruktur kann Streuelemente aufweisen, die mit bloßem Auge sichtbar sind und Abmessungen im Millimeter- oder Zentimeterbereich aufweisen. Es wäre aber auch denkbar, dass die Streustruktur als eine Mikrostruktur mit Abmessungen der Strukturelemente im Mikrometerbereich oder noch kleiner ausgebildet ist.

Es kann vorgesehen sein, dass die Zusatzlichtfunktion des Nebenlichtmoduls aktiv ist, wenn die Hauptlichtfunktion des Nebenlichtmoduls aktiv ist. In diesem Sinne wird vorgeschlagen, dass die Zusatzlichtfunktion des Nebenlichtmoduls unabhängig von einer Aktivierung der abgeblendeten Hauptlichtverteilung des Hauptlichtmoduls aktiv sein kann, wenn die Hauptlichtfunktion des Nebenlichtmoduls aktiv ist. Selbstverständlich wäre es aber auch denkbar, die Zusatzlichtfunktion des Nebenlichtmoduls zu deaktivieren, wenn die Hauptlichtfunktion des Nebenlichtmoduls aktiv ist, und die Zusatzlichtfunktion des Nebenlichtmoduls ausschließlich dann zu aktivieren, wenn die Hauptlichtfunktion des Hauptlichtmoduls aktiv ist.

Ferner wird vorgeschlagen, dass das Nebenlichtmodul, insbesondere die zur Erzeugung der Zusatzlichtfunktion vorgesehenen Lichtquellen und die Lichtleiterplatte, derart ausgebildet sind, dass die Lichtstärke der Zusatzlichtfunktion zwischen 10 cd und 400 cd liegt. Wenn das Hauptlichtmodul zur Erzeugung unterschiedlicher Hauptlichtfunktionen ausgebildet ist, wäre es auch denkbar, dass das Nebenlichtmodul derart ausgebildet ist, dass die Lichtstärke der Zusatzlichtfunktion in Abhängigkeit von einer aktuell aktiven Hauptlichtfunktion des mindestens einen Hauptlichtmoduls automatisch so einstellbar ist, dass genügend Ambientelicht erzeugt wird, aber gleichzeitig alle aktivierten Module in der Summe keine unzulässige Blendung erzeugen.

In diesem Zusammenhang wird vorgeschlagen, dass die Zusatzlichtfunktion des Nebenlichtmoduls zusammen mit der abgeblendeten Hauptlichtfunktion des Hauptlichtmoduls oder einem Teil davon, insbesondere mit dem die Zone oberhalb der Helldunkelgrenze einer abgeblendeten Lichtverteilung ausleuchtenden Teil der Hauptlichtfunktion, gesetzliche Anforderungen an eine Signallichtfunktion für Kraftfahrzeuge, insbesondere an Begrenzungslicht oder Tagfahrlicht, erfüllt.

Weitere Merkmale und Vorteile der vorliegenden Erfindung werden nachfolgend anhand der Figuren näher erläutert. Es zeigen:
- Figur 1: eine Draufsicht auf eine Platine eines Nebenlichtmoduls eines erfindungsgemäßen Scheinwerfers für Kraftfahrzeuge, mit darauf angeordneten LED-Lichtquellen zur Erzeugung einer Hauptlichtfunktion und einer Zusatzlichtfunktion des Nebenlichtmoduls;
- Figur 2: eine perspektivische Ansicht von schräg hinten auf eine Lichtleiterplatte eines Nebenlichtmoduls eines erfindungsgemäßen Scheinwerfers für Kraftfahrzeuge, zur Erzeugung einer Zusatzlichtfunktion des Nebenlichtmoduls;
- Figur 3: eine Draufsicht auf einen Teil eines Nebenlichtmoduls eines erfindungsgemäßen Scheinwerfers für Kraftfahrzeuge, zur Erzeugung einer Zusatzlichtfunktion des Nebenlichtmoduls;
- Figur 4: eine perspektivische Ansicht auf ein Nebenlichtmodul eines erfindungsgemäßen Scheinwerfers für Kraftfahrzeuge, mit beispielhaft eingezeichneten Lichtstrahlen während der Erzeugung einer Zusatzlichtfunktion des Nebenlichtmoduls;
- Figur 5: eine Simulation eines durch die Zusatzlichtfunktion des Nebenlichtmoduls abgestrahlten Lichtbündels auf einem Messschirm, der vor dem mit dem erfindungsgemäßen Scheinwerfer ausgestatteten Kraftfahrzeug in einem Abstand zu diesem angeordnet ist;
- Figuren 6a,: 6b ein Nachtdesign einer Projektionslinse eines Nebenlichtmoduls eines erfindungsgemäßen Scheinwerfers für Kraftfahrzeuge aus verschiedenen Blickwinkeln;
- Figuren 7a bis 7d: verschiedene Ansichten eines Nebenlichtmoduls eines erfindungsgemäßen Scheinwerfers für Kraftfahrzeuge, umfassend eine Ansicht entgegen einer Lichtaustrittsrichtung, einen Vertikalschnitt entlang einer optischen Achse, eine Draufsicht und einen vergrößerten Ausschnitt des Vertikalschnitts; und
- Figur 8: eine schematische Ansicht eines erfindungsgemäßen Scheinwerfers für Kraftfahrzeuge.

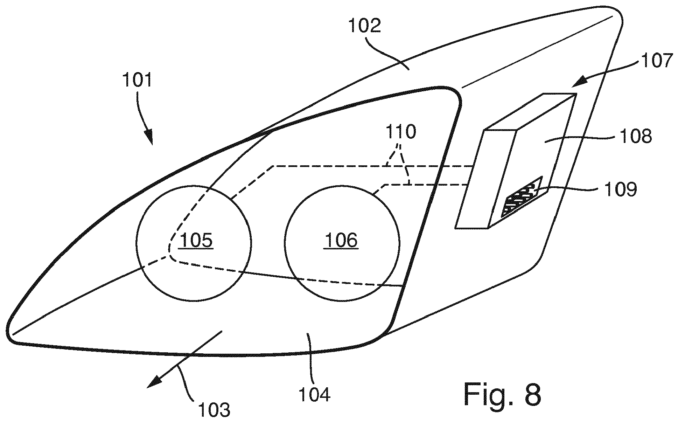

In Figur 8 ist ein erfindungsgemäßer Kraftfahrzeugscheinwerfer in seiner Gesamtheit mit dem Bezugszeichen 101 bezeichnet. Der Scheinwerfer 101 umfasst ein Gehäuse 102, das vorzugsweise aus Kunststoff gefertigt ist. In einer Lichtaustrittsrichtung 103 weist das Scheinwerfergehäuse 102 eine Lichtaustrittsöffnung auf, die durch eine transparente Abdeckscheibe 104 verschlossen ist. Die Abdeckscheibe 104 ist aus farblosem Kunststoff oder Glas gefertigt. Die Scheibe 104 kann ohne optisch wirksame Profile als sogenannte klare Scheibe ausgebildet sein. Alternativ kann die Scheibe 104 zumindest bereichsweise mit optisch wirksamen Profilen (z.B. Zylinderlinsen oder Prismen) versehen sein, die eine Streuung des hindurchtretenden Lichts, vorzugsweise in horizontaler Richtung bewirken.

Im Inneren des Scheinwerfergehäuses 102 sind in dem dargestellten Beispiel zwei nur schematisch gezeichnete Lichtmodule 105, 106 angeordnet. Die Lichtmodule 105, 106 sind fest oder relativ zu dem Gehäuse 102 bewegbar angeordnet. Durch eine Relativbewegung der Lichtmodule 105, 106 zum Gehäuse 102 in horizontaler Richtung kann eine dynamische Kurvenlichtfunktion realisiert werden. Bei einer Bewegung der Lichtmodule 105, 106 um eine horizontale Achse, also in vertikaler Richtung, kann eine Leuchtweitenregelung realisiert werden. Selbstverständlich können in dem Scheinwerfergehäuse 102 auch mehr als die beiden dargestellten Lichtmodule 105, 106 vorgesehen sein. Nachfolgend wird das Lichtmodul 105 als Hauptlichtmodul und das Lichtmodul 106 als Nebenlichtmodul bezeichnet.

An der Außenseite des Scheinwerfergehäuses 102 ist ein Steuergerät 107 in einem Steuergerätegehäuse 108 angeordnet. Selbstverständlich kann das Steuergerät 107 auch an einer beliebig anderen Stelle der Beleuchtungseinrichtung 101 angeordnet sein. Insbesondere kann für jedes der Lichtmodule 105, 106 ein eigenes Steuergerät vorgesehen sein, wobei die Steuergeräte integraler Bestandteil der Lichtmodule 105, 106 sein können. Selbstverständlich kann das Steuergerät 107 auch entfernt von der Beleuchtungseinrichtung 101, bspw. im Motorraum des Kraftfahrzeugs, angeordnet sein. Das Steuergerät 107 dient zur Steuerung und/oder Regelung der Lichtmodule 105, 106 bzw. von Teilkomponenten der Lichtmodule 105, 106, wie beispielsweise von Lichtquellen (z.B. Halbleiterlichtquellen, insbesondere LEDs) der Lichtmodule 105, 106.

Die Ansteuerung der Lichtmodule 105, 106 bzw. der Teilkomponenten durch das Steuergerät 107 erfolgt über Verbindungsleitungen 110, die in Figur 8 durch eine gestrichelte Linie lediglich symbolisch dargestellt sind. Über die Leitungen 110 kann auch eine Versorgung der Lichtmodule 105, 106 mit elektrischer Energie erfolgen. Die Leitungen 110 sind aus dem Inneren der Beleuchtungseinrichtung 101 durch eine Öffnung im Scheinwerfergehäuse 102 in das Steuergerätegehäuse 108 geführt und dort an die Schaltung des Steuergerätes 107 angeschlossen. Falls Steuergeräte als integraler Bestandteil der Lichtmodule 105, 106 vorgesehen sind, können die Leitungen 110 und kann die Öffnung in dem Scheinwerfergehäuse 102 entfallen. Das Steuergerät 107 umfasst ein Steckerelement 109 zum Anschluss eines Verbindungskabels zu einer übergeordneten Steuereinheit (z.B. in Form einer sog. Body Controller Unit) und/ oder einer Energiequelle (z.B. in Form einer Fahrzeugbatterie).

Der Scheinwerfer 101 aus Figur 8 weist ein Hauptlichtmodul 105 auf, das zur Erzeugung einer abgeblendeten Hauptlichtfunktion mit einer im Wesentlichen horizontalen Helldunkelgrenze ausgebildet ist. Das Hauptlichtmodul 105 ist vorzugsweise als ein Projektionsmodul ausgebildet; es kann jedoch auch als ein Reflexionsmodul realisiert sein. Die abgeblendete Hauptlichtfunktion ist eine Lichtfunktion mit oberer Helldunkelgrenze, die nicht nur kurzzeitig aktiviert ist. Insbesondere kann die Hauptlichtfunktion des Hauptlichtmoduls 105 ein Abblendlicht oder ein Nebellicht sein. Der Scheinwerfer 101 weist ferner ein Nebenlichtmodul 106 auf, das zur Erzeugung zweier individuell ansteuerbarer Lichtfunktionen ausgebildet ist, nämlich einer Hauptlichtfunktion und einer weniger lichtstarken Zusatzlichtfunktion. Das Nebenlichtmodul 106 ist vorzugsweise als ein Projektionsmodul ausgebildet. Die Hauptlichtfunktion des Nebenlichtmoduls 106 ist bspw. ein Fernlicht. Die Zusatzlichtfunktion ist bspw. eine Illuminationsfunktion, um das Nebenlichtmodul 106 in bestimmten Situationen auszuleuchten, damit für einen Betrachter, der sich in der entblendeten Zone vor dem Kraftfahrzeug befindet (d.h. über einer oberen etwa horizontalen Helldunkelgrenze 202, 204 und/oder in einem dunkleren Bereich neben einer etwa vertikalen Helldunkelgrenze), in einer Blickrichtung entgegen der Lichtaustrittsrichtung 103 der Eindruck entsteht, dass das Hauptlichtmodul 105 und das Nebenlichtmodul 106 in etwa gleich hell leuchten. Die Zusatzlichtfunktion kann auch als eine Ambientebeleuchtung für das Nebenlichtmodul 106 bezeichnet werden.

Die Fernlichtverteilung als Hauptlichtfunktion des Nebenlichtmoduls 106 umfasst insbesondere eine Streifen- oder Block-Fernlichtverteilung, die in einem Fernbereich 212 oberhalb der Helldunkelgrenze 202, 204 der abgeblendeten Hauptlichtfunktion des Hauptlichtmoduls 105 mindestens zwei individuell ansteuerbare und ausleuchtbare, in horizontaler Richtung nebeneinander angeordnete Streifen oder Blocksegmente aufweist. Diese sind im Fernlichtmodus des Scheinwerfers 101 in der Regel aktiviert und können in Abhängigkeit von Position und Anzahl von vor dem Kraftfahrzeug befindlichen anderen Verkehrsteilnehmern gezielt aktiviert, gedimmt oder deaktiviert werden, um eine Blendung der anderen Verkehrsteilnehmer zu verhindern.

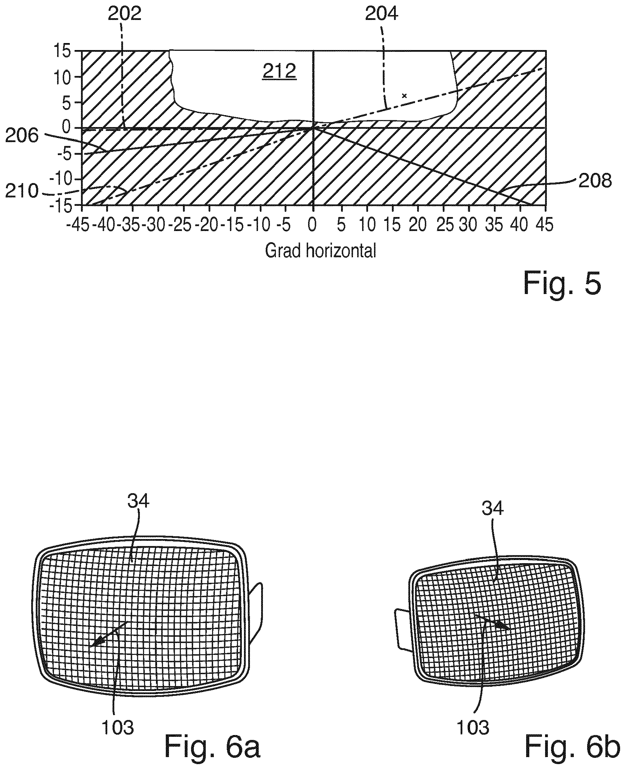

Figur 5 zeigt eine Situation, in der die Zusatzlichtfunktion des Nebenlichtmoduls 106 aktiviert ist. Die Zusatzlichtfunktion wird bspw. aktiviert, wenn der Scheinwerfer 101 eine abgeblendete Lichtfunktion erzeugt. In Figur 5 ist ein Fahrbahnrand auf der Gegenverkehrsseite mit dem Bezugszeichen 206 und ein Fahrbahnrand auf der eigenen Verkehrsseite mit dem Bezugszeichen 208 bezeichnet. Eine angedeutete Fahrbahn-Mittellinie 210 trennt die Gegenverkehrsseite von der eigenen Verkehrsseite. Eine abgeblendete Lichtfunktion in Form eines Abblendlichts würde einen Bereich auf einem vor dem Kraftfahrzeug angeordneten Messschirm, wie er in Figur 5 gezeigt ist, ausleuchten, der hauptsächlich unterhalb einer oberen Helldunkelgrenze 202, 204 liegt. Dabei ist eine asymmetrische Helldunkelgrenze mit einem im Wesentlichen horizontalen Anteil 202 auf der Gegenverkehrsseite 206 und einem davon ausgehend zum Fahrbahnrand 208 auf der eigenen Verkehrsseite hin ansteigenden Anteil 204 gezeigt. Bei Realisierung des Abblendlichts wird insbesondere der Bereich unterhalb der Helldunkelgrenze 202, 204 ausgeleuchtet. Der Bereich oberhalb der Helldunkelgrenze 202, 204 wird in der Regel nur mit sehr geringen Lichtstärken ausgeleuchtet, um eine Blendung anderer Verkehrsteilnehmer zu vermeiden.

Zur Realisierung des Abblendlichts ist die abgeblendete Hauptlichtfunktion des Hauptlichtmoduls 105 aktiviert, sodass das Hauptlichtmodul 105 beispielsweise ein Abblendlicht erzeugt. Die Hauptlichtfunktion des Nebenlichtmoduls 106 ist deaktiviert, das Nebenlichtmodul 106 erzeugt also kein Fernlicht. Alternativ kann die Hauptlichtfunktion des Nebenlichtmoduls 106 auch derart aktiviert sein, dass das Nebenlichtmodul 106 entgegen der Lichtaustrittsrichtung 103 des Scheinwerfers 101 ohne eine Aktivierung der Zusatzlichtfunktion des Nebenlichtmoduls 106 für einen Betrachter dunkler erscheint als das Hauptlichtmodul 105. Die genannte Situation umfasst also all jene Fälle, in denen das Hauptlichtmodul 105 eine abgeblendete Lichtverteilung erzeugt und das Nebenlichtmodul 106 für einen Betrachter entgegen der Lichtaustrittsrichtung 103 dunkler erscheint als das Hauptlichtmodul 105. Bei Erzeugung der abgeblendeten Lichtfunktion des Scheinwerfers 101 ist zusätzlich die Zusatzlichtfunktion des Nebenlichtmoduls 106 aktiviert, so dass das Nebenlichtmodul 106 entgegen der Lichtaustrittsrichtung 103 des Scheinwerfers 101 für den Betrachter, der sich in der entblendeten Zone vor dem Kraftfahrzeug befindet (d.h. über einer oberen etwa horizontalen Helldunkelgrenze 202, 204 und/oder in einem dunkleren Bereich neben einer etwa vertikalen Helldunkelgrenze), heller erscheint als ohne die Zusatzlichtfunktion. Durch die Zusatzlichtfunktion wird insbesondere ein Teil des Fernbereichs 212 oberhalb der Helldunkelgrenze 202, 204 ausgeleuchtet (vgl. Figur 5). Das Abblendlicht des Hauptlichtmoduls 105 und die Zusatzlichtfunktion des Nebenlichtmoduls 106 im Fernbereich 212 ergeben zusammen die abgeblendete Lichtfunktion des Scheinwerfers 101.

Das Nebenlichtmodul 106 weist zur Erzeugung der Zusatzlichtfunktion eine Lichtleiterplatte 20 auf, in die mindestens eine Lichtquelle 22, die nicht zur Erzeugung der Hauptlichtfunktion des Nebenlichtmoduls 106 dient, Licht einkoppelt.

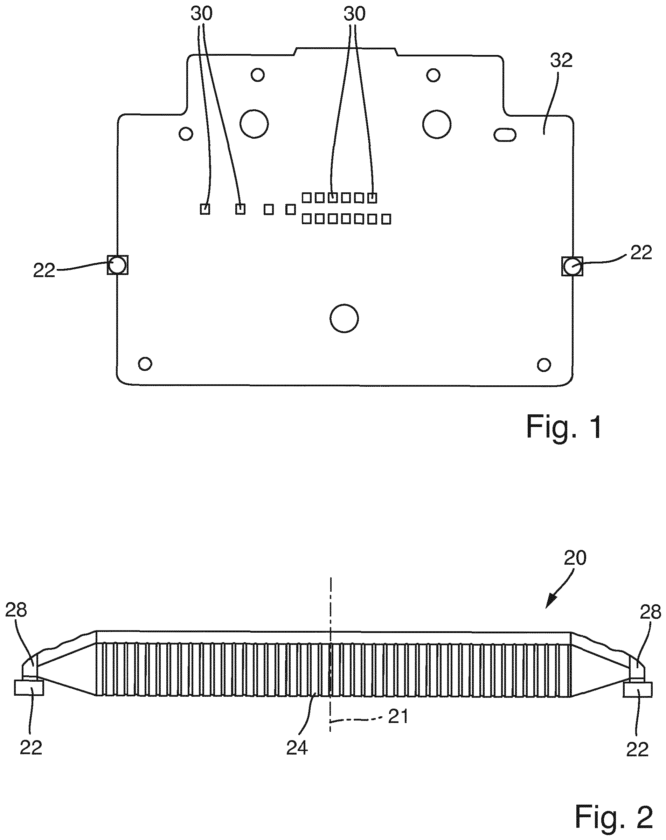

Ein Beispiel für eine solche Lichtleiterplatte 20 ist in Figur 2 gezeigt. Dabei sind zwei Lichtquellen 22 vorgesehen, die an gegenüberliegenden Seiten der Lichtleiterplatte 20 Licht einkoppeln. Die Lichtleiterplatte 20 verfügt über Umlenkprismen 28, durch die das eingekoppelte Licht der Lichtquellen 22 in die Flächenerstreckung der Lichtleiterplatte 20 umgelenkt wird. Das eingekoppelte Licht propagiert in der Lichtleiterplatte 20 mittels Totalreflexion. Die Lichtleiterplatte 20 weist Auskoppelelemente 24 zum Auskoppeln des propagierenden Lichts aus der Lichtleiterplatte 20 über eine Lichtaustrittsfläche 26 der Lichtleiterplatte 20 auf. Die Lichtaustrittsfläche 26 ist vorzugsweise auf einer den Auskoppelelemente 24 gegenüberliegenden Seite der Lichtleiterplatte 20 ausgebildet. Das aus der Lichtleiterplatte 20 ausgekoppelte Licht leuchtet einen Bereich 212 der Lichtverteilung des Scheinwerfers 101 oberhalb der Helldunkelgrenze 202, 204 der abgeblendeten Hauptlichtfunktion des Hauptlichtmoduls 105 aus (vgl. Figur 5). Die Lichtleiterplatte 20 ist derart ausgestaltet, dass die Leuchtdichte des ausgekoppelten Lichts über die Lichtaustrittsfläche 26 möglichst homogen verteilt ist. Zu diesem Zweck kann auf der Lichtaustrittsfläche 26 zumindest bereichsweise eine Streustruktur ausgebildet sein, durch die das ausgekoppelte Licht in horizontaler und/oder vertikaler Richtung gestreut wird. Die Lichtleiterplatte 20 aus Figur 2 wird um eine vertikale Mittelachse 21 um 180° gedreht und dann auf der in Figur 1 gezeigten Platine 32 aufgebracht, sodass das Licht aus der Zeichenebene heraus über die Lichtaustrittsfläche 26 aus der Lichtleiterplatte 20 ausgekoppelt wird.

Das bedeutet mit anderen Worten, wenn ein Nebenlichtmodul 106 des Scheinwerfers 101 bei Realisierung einer abgeblendeten Lichtfunktion des Scheinwerfers 101 durch Aktivierung der abgeblendeten Hauptlichtfunktion des Hauptlichtmoduls 105 von vorne in der entblendeten Zone (oberhalb der Helldunkelgrenze 202, 204) dunkler als das Hauptlichtmodul 105 erscheint, dieses dunklere oder bezüglich seiner Hauptlichtfunktion ausgeschaltete Nebenlichtmodul 106 mit geringen Intensitäten der Zusatzlichtfunktion des Nebenlichtmoduls 106 zusätzlich erhellt wird, ohne den Betrachter zu blenden. Insbesondere wird dadurch das Nacht-Erscheinungsbild eines sich bezüglich seiner Hauptlichtfunktion nicht in Betrieb befindlichen Nebenlichtmoduls 106 dem des aktivierten Hauptlichtmoduls 105 nachempfunden.

Das Nebenlichtmodul 106 weist außer den Lichtquellen 22 zur Realisierung der Zusatzlichtfunktion weitere Lichtquellen 30 zur Realisierung der Hauptlichtfunktion des Nebenlichtmoduls 106 auf. Die Lichtquellen 22, 30 des Nebenlichtmoduls 106 zur Erzeugung der Hauptlichtfunktion und der Zusatzlichtfunktion sind vorzugsweise als Halbleiterlichtquellen, insbesondere als Leuchtdioden (LEDs) oder als Laserdioden, ausgebildet. Besonders bevorzugt sind die Lichtquellen 22, 30 des Nebenlichtmoduls 106 auf einer gemeinsamen Platine 32 angeordnet. Es genügt somit ein gemeinsamer Kühlkörper für alle Halbleiterlichtquellen 22, 30, und die Montage des Lichtmoduls 106 wird dadurch erheblich erleichtert. Die Anordnung der Lichtquellen 22 auf der gemeinsamen Platine 32 wird insbesondere durch die Verwendung einer in geeigneter Weise ausgestalteten Lichtleiterplatte 20, sofern erforderlich mit Umlenkprismen 28, für die Erzeugung der Zusatzlichtfunktion des Nebenlichtmoduls 106 ermöglicht. Vorzugsweise weist das Nebenlichtmodul 106 Lichtquellen 22 zur Erzeugung der Zusatzlichtfunktion in geringerer Anzahl und/oder mit geringerer Leistung als Lichtquellen 30 zur Erzeugung der Hauptlichtfunktion auf.

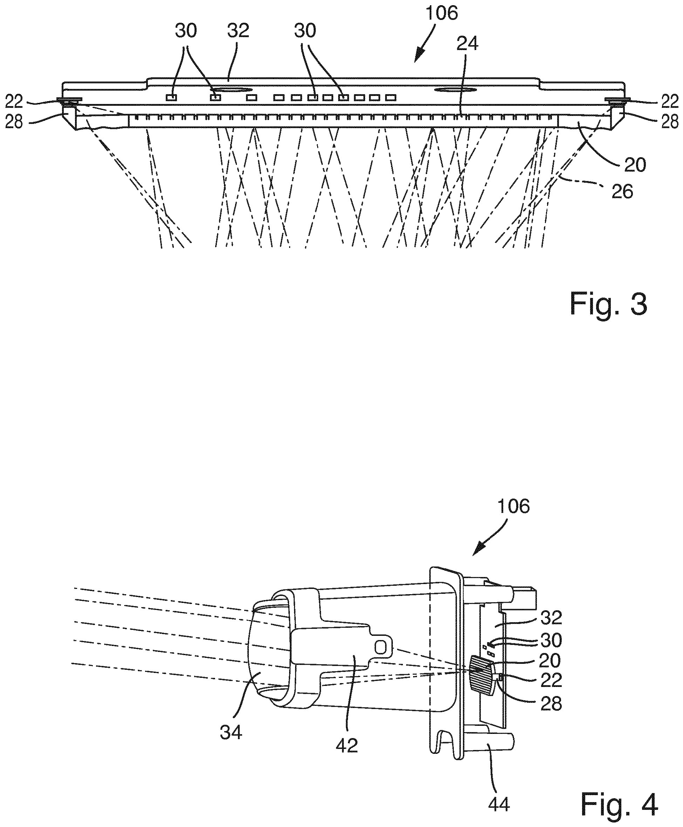

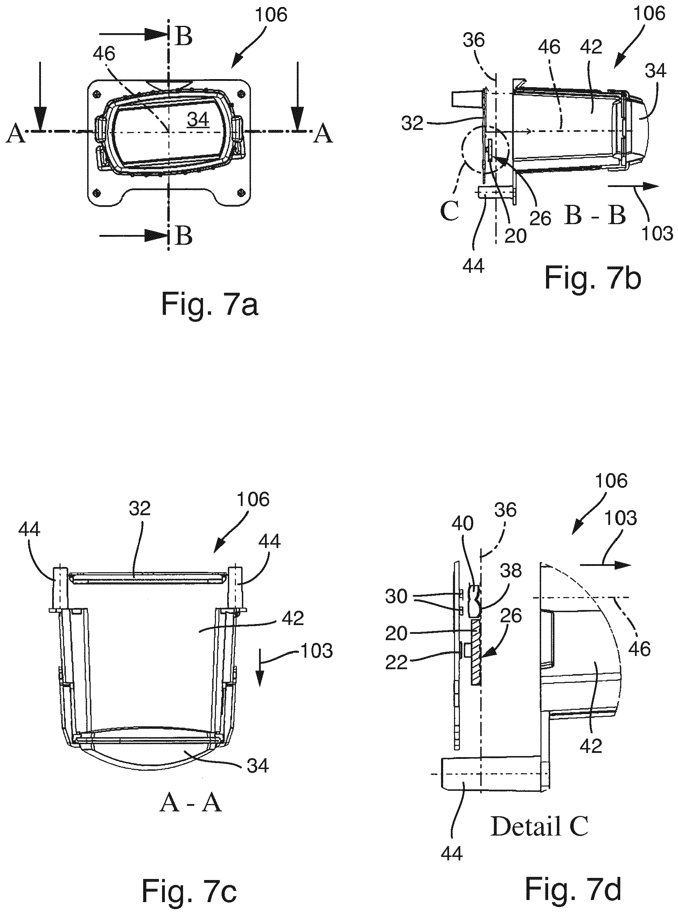

Das Nebenlichtmodul 106 ist vorzugsweise als ein Projektionsmodul mit einer abbildenden Sekundäroptik 34 ausgebildet (vergleiche Figur 4), wobei die Hauptabstrahlrichtung der Lichtaustrittsflächen von Lichtquellen 30 zur Erzeugung der Hauptlichtfunktion des Nebenlichtmoduls 106 oder die Hauptabstrahlrichtung der Lichtaustrittsflächen 38 von den Lichtquellen 30 zugeordneten Primäroptiken 40 (vergleiche Figur 7d) vorzugsweise zu der Sekundäroptik 34 weisen und im Bereich einer Fokalebene 36 der Sekundäroptik 34 angeordnet sind. Die Austrittsflächen der Lichtquellen 30 bzw. - sofern Primäroptiken 40 vorhanden sind - die Austrittsflächen 38 der Primäroptiken 40 werden zur Erzeugung der Hauptlichtfunktion des Nebenlichtmoduls 106 durch die Sekundäroptik 34 auf der Fahrbahn vor dem mit dem Scheinwerfer 101 ausgestatteten Kraftfahrzeug abgebildet. Die Primäroptiken 40 dienen zum Bündeln und Formen des von den Lichtquellen 30 ausgesandten Lichts. Sie sind bspw. als lichtbrechende und/oder totalreflektierende Vorsatzoptiken, als Linsen oder als Spiegelreflektoren ausgebildet. Insbesondere sind alle Hauptabstrahlrichtungen von Lichtaustrittsflächen der Lichtquellen 22 und 30 in Richtung der Sekundäroptik 34 gerichtet, also im Wesentlichen parallel zu der Fläche einer Platine, auf der die Lichtquellen 22, 30 angeordnet (befestigt und elektrisch kontaktiert) sind.

Besonders bevorzugt ist die Sekundäroptik 34 des Nebenlichtmoduls 106 als eine Projektionslinse ausgebildet. Diese ist beispielsweise mittels eines tubusartigen Linsenhalters 42 über Haltestege 44 an dem restlichen Lichtmodul 106, insbesondere bezüglich der Platine 32, festgelegt. Besonders bevorzugt ist es, wenn das Hauptlichtmodul 105 und das Nebenlichtmodul 106 beide als Projektionsmodule ausgebildet sind. Durch die Zusatzlichtfunktion des Nebenlichtmoduls 106 wird vorzugsweise die gesamte Sekundäroptik 34, welche eine Zwischenlichtverteilung aus der Fokalebene 36 auf die Fahrbahn vor das Kraftfahrzeug projiziert, insbesondere die gesamte Eintrittsfläche der Projektionslinse, vollständig und ausgeleuchtet (vgl. Figur 4). Dafür wird in der Regel eine möglichst gleichmäßige Ausleuchtung der Eintrittsfläche angestrebt. Ganz besonders bevorzugt ist es, wenn sowohl die Hauptlichtfunktion als auch die Zusatzlichtfunktion des Nebenlichtmoduls 106 jeweils eine Eintrittsfläche der Projektionslinse 34 vollständig ausleuchten.

In den Figuren 7b und 7d ist gezeigt, dass die Lichtaustrittsfläche 26 der Lichtleiterplatte 20 im Bereich der Fokalebene 36 der Sekundäroptik 34 angeordnet ist. Die Lichtaustrittsfläche 26 wird über die Sekundäroptik 34 auf der Fahrbahn vor dem Kraftfahrzeug abgebildet. Die Lichtaustrittsfläche 26 der Lichtleiterplatte 20 ist bezüglich einer Horizontalebene des Nebenlichtmoduls 106, welche eine optische Achse 46 des Nebenlichtmoduls 106 enthält, in geringem vertikalen Abstand angeordnet ist, vorzugsweise direkt unterhalb der Lichtquellen 30 zur Erzeugung der Hauptlichtfunktion. Besonders bevorzugt sind die Lichtquellen 30 zur Erzeugung der Hauptlichtfunktion des Nebenlichtmoduls 106 in vertikaler Richtung betrachtet im Bereich dieser Horizontalebene angeordnet und die Lichtquellen 22 zur Erzeugung der Zusatzlichtfunktion und die Lichtleiterplatte 20 unterhalb dieser Horizontalebene angeordnet.

Die Sekundäroptik 34 kann zumindest bereichsweise Streustrukturen zum Streuen des abgebildeten Lichts in horizontaler und/oder vertikaler Richtung aufweisen. Wenn die Sekundäroptik 34 - wie in den hier gezeigten Beispielen - als eine Projektionslinse ausgebildet ist, können die Streustrukturen auf der Lichteintritts- und/oder der Lichtaustrittsfläche der Linse ausgebildet sein. Die Streustrukturen beeinflussen die durch die Projektionslinse 34 hindurchtretenden Lichtbündel beider Lichtfunktionen des Nebenlichtmoduls 106 derart, dass die Abbildung der Lichtfunktionen in horizontaler und/oder vertikaler Richtung verwischt wird. Die Streustruktur homogenisiert und weitet die jeweilige Lichtverteilung bzw. die gegebenenfalls vorhandenen Lichtstreifen oder -blocksegmente in horizontaler und/oder vertikaler Richtung in einem jeweils festgelegten Maße. Die Streustruktur kann auch asymmetrisch streuen, so dass der Schwerpunkt des Lichts etwas verschoben wird, dieses dann eher vertikal nach oben oder unten. Die Streuung hat den Vorteil, dass die zusätzliche Illumination des Nebenlichtmoduls 106 durch die Zusatzlichtfunktion aus verschiedenen Betrachtungsrichtungen von außen ähnlich gut sichtbar ist. Dies kann man anhand der Figuren 6a und 6b gut erkennen, wo eine Ansicht auf die Lichtaustrittsfläche der Projektionslinse 34 entgegen der Lichtaustrittsrichtung 103 aus verschiedenen Blickrichtungen dargestellt ist. Insbesondere bei einer Ausgestaltung der Hauptlichtfunktion des Nebenlichtmoduls 106 als Streifen- oder Blockfernlicht ist es vorteilhaft, dass sich auf einem Messschirm vor dem Kraftfahrzeug (vgl. Figur 5) horizontal benachbarte Fernlichtstreifen oder Fernlichtblocksegmente etwas, aber nicht vollständig überlappen und vertikal homogen ausgeleuchtete Streifen oder Blocksegmente entstehen. Die Streustruktur streut dann also horizontal maximal in etwa eine halbe Streifen-/ Blocksegmentbreite in beide Richtungen. Die vertikale Streuung kann dabei stärker ausgeführt sein, so dass Streifen oder Blocksegmente mit einer gewünschten Vertikalausdehnung entstehen. Die Streustruktur kann in vertikaler Richtung auch hier asymmetrisch streuen, so dass der Schwerpunkt des Lichts etwas nach oben oder unten verschoben wird.

Es kann vorgesehen sein, dass die Zusatzlichtfunktion des Nebenlichtmoduls 106 unabhängig von einer Aktivierung der abgeblendeten Hauptlichtverteilung des Hauptlichtmoduls 105 aktiv ist, wenn die Hauptlichtfunktion (z.B. Fernlichtverteilung) des Nebenlichtmoduls 106 aktiv ist. Selbstverständlich wäre es aber auch denkbar, die Zusatzlichtfunktion des Nebenlichtmoduls 106 zu deaktivieren, wenn die Hauptlichtfunktion des Nebenlichtmoduls 106 aktiv ist, und die Zusatzlichtfunktion des Nebenlichtmoduls 106 ausschließlich dann zu aktivieren, wenn die Hauptlichtfunktion des Hauptlichtmoduls 105 aktiv ist.

Das Nebenlichtmodul 106, insbesondere die zur Erzeugung der Zusatzlichtfunktion vorgesehenen Lichtquellen 22 und die Lichtleiterplatte 20, derart ausgebildet sind, dass die Lichtstärke der Zusatzlichtfunktion zwischen 10 cd und 400 cd liegt. Wenn das Hauptlichtmodul 105 zur Erzeugung unterschiedlicher Hauptlichtfunktionen ausgebildet ist oder mehrere Hauptlichtmodule 105 zur Erzeugung unterschiedlicher Hauptlichtfunktionen vorgesehen sind, wäre es auch denkbar, dass das Nebenlichtmodul 106 derart ausgebildet ist, dass die Lichtstärke der Zusatzlichtfunktion in Abhängigkeit von einer aktuell aktiven Hauptlichtfunktion des mindestens einen Hauptlichtmoduls 105 dazu passend automatisch einstellbar ist, z.B. so dass sich eine hinreichende Aufhellung der entblendeten Zone ergibt, aber gleichzeitig in der Summe aller aktiven Module keine unzulässige Blendung erzeugt wird. In diesem Zusammenhang wird vorgeschlagen, dass die Zusatzlichtfunktion des Nebenlichtmoduls 106 zusammen mit der abgeblendeten Hauptlichtfunktion des Hauptlichtmoduls 105 oder einem Teil davon, insbesondere mit dem die Zone 212 oberhalb der Helldunkelgrenze 202, 204 der abgeblendeten Lichtverteilung ausleuchtenden Teil der Hauptlichtfunktion, gesetzliche Anforderungen an eine Signallichtfunktion für Kraftfahrzeuge, insbesondere an Begrenzungslicht oder Tagfahrlicht, erfüllt.

Zur Ansteuerung der Lichtquellen 22 zur Erzeugung der Zusatzlichtfunktion des Nebenlichtmoduls 106 kann das Steuergerät 107 eingesetzt werden. Dabei ist vorgeschlagen, dass das Steuergerät 107 über einen Mikroprozessor verfügt, auf dem ein Computerprogramm ablauffähig ist, das in Abhängigkeit von bestimmten Umgebung-und Betriebsbedingungen des Scheinwerfers 101 die Lichtquellen 22 entsprechend ansteuert, wenn es auf dem Mikroprozessor abläuft. Im Rahmen der Ansteuerung der Lichtquellen 22 können diese ein- und ausgeschaltet sowie gedimmt werden.

Mit dem erfindungsgemäßen Scheinwerfer 101 und insbesondere der erfindungsgemäßen Ausgestaltung des Nebenlichtmoduls 106 kann die Sekundäroptik 34 besonders homogen ausgeleuchtet werden, sodass das Nebenlichtmodul 106 in Blickrichtung entgegen der Lichtaustrittsrichtung 103 aus verschiedenen Betrachtungswinkeln ausgeleuchtet erscheint. Da das Nebenlichtmodul 106 neben der einen Hauptlichtfunktion (z.B. Fernlicht) keine weiteren Hauptlichtfunktionen (z.B. Abblendlicht) mehr erfüllen muss, insbesondere da das Nebenlichtmodul 106 nicht als ein Bi-Funktionslichtmodul ausgebildet ist, ist es einfach im Aufbau und kostengünstig in der Herstellung. Es ergibt sich ein geringer Materialeinsatz in dem Nebenlichtmodul 106 (geringe Anzahl bzw. leistungsschwache LED-Lichtquellen 22 für die Zusatzlichtfunktion, keine Spiegelblende zur Erzeugung einer Helldunkelgrenze, geringer Energieverbrauch, geringer Wärmeeintrag, dadurch Einsatz kleinerer und leichterer Kühlkörper möglich). Die Einstellmechanik in dem Scheinwerfer 101 entspricht der eines herkömmlichen Fernlichtmoduls. Auch der Fertigungsaufwand für die Moduljustage entspricht der eines herkömmlichen Fernlichtmoduls. Eine komplizierte Einstellmechanik, wie sie für ein Bi-Funktionslichtmodul erforderlich ist, wird nicht benötigt. Insgesamt ergibt sich durch die Erfindung ein Scheinwerfer 101, der auf effektive und günstige Weise so realisiert ist, dass seine mindestens zwei (meist nebeneinander angeordneten) Einzelmodule 105, 106 aus verschiedenen Blickrichtungen entgegen der Lichtaustrittsrichtung 103 gleich illuminiert erscheinen.

## Patentansprüche

1. Kraftfahrzeugscheinwerfer (101) mit mindestens zwei Lichtmodulen (105, 106), der zur Erzeugung zumindest einer abgeblendeten Lichtfunktion in einer Lichtaustrittsrichtung (103) des Scheinwerfers (101) ausgebildet ist,
wobei mindestens ein Hauptlichtmodul (105) zur Erzeugung einer abgeblendeten Hauptlichtfunktion mit einer im Wesentlichen horizontalen Helldunkelgrenze (202, 204) ausgebildet ist,
wobei mindestens ein Nebenlichtmodul (106) zur Erzeugung zweier individuell ansteuerbarer Lichtfunktionen ausgebildet ist, nämlich einer Hauptlichtfunktion und einer weniger lichtstarken Zusatzlichtfunktion,
wobei zur Erzeugung der abgeblendeten Lichtfunktion des Scheinwerfers (101) die abgeblendete Hauptlichtfunktion des mindestens einen Hauptlichtmoduls (105) aktiviert und die Hauptlichtfunktion des mindestens einen Nebenlichtmoduls (106) deaktiviert oder nur so aktiviert ist, dass das mindestens eine Nebenlichtmodul (106) entgegen der Lichtaustrittsrichtung (103) des Scheinwerfers (101) ohne eine Aktivierung der Zusatzlichtfunktion des mindestens einen Nebenlichtmoduls (106) für einen Betrachter dunkler erscheint als das mindestens eine Hauptlichtmodul (105),
wobei bei Erzeugung der abgeblendeten Lichtfunktion des Scheinwerfers (101) zusätzlich die Zusatzlichtfunktion des mindestens einen Nebenlichtmoduls (106) aktiviert ist, so dass das mindestens eine Nebenlichtmodul (106) entgegen der Lichtaustrittsrichtung (103) des Scheinwerfers (101) für einen Betrachter heller erscheint als ohne die Zusatzlichtfunktion,
wobei das mindestens eine Nebenlichtmodul (106) zur Erzeugung der Zusatzlichtfunktion eine Lichtleiterplatte (20) aufweist, in die mindestens eine Lichtquelle (22), die nicht zur Erzeugung der Hauptlichtfunktion des mindestens einen Nebenlichtmoduls (106) dient, Licht einkoppelt, das in der Lichtleiterplatte (20) mittels Totalreflexion propagiert, wobei die Lichtleiterplatte (20) Auskoppelelemente (24) zum Auskoppeln des propagierenden Lichts aus der Lichtleiterplatte (20) über eine Lichtaustrittsfläche (26) der Lichtleiterplatte (20) aufweist, und
wobei das aus der Lichtleiterplatte (20) ausgekoppelte Licht einen Bereich (212) oberhalb der Helldunkelgrenze (202, 204) der abgeblendeten Hauptlichtfunktion des mindestens einen Hauptlichtmoduls (105) ausleuchtet,
**dadurch gekennzeichnet, dass**
das mindestens eine Hauptlichtmodul (105) ausgebildet ist, eine abgeblendete Hauptlichtfunktion in Form einer Abblendlichtverteilung zu erzeugen, und
das mindestens eine Nebenlichtmodul (106) ausgebildet ist, eine Hauptlichtfunktion in Form einer Fernlichtverteilung zu erzeugen,
wobei die Zusatzlichtfunktion das Nebenlichtmodul (106) ausleuchtet, damit für einen Betrachter, der sich in einer entblendeten Zone vor dem Kraftfahrzeug befindet, die sich oberhalb einer oberen, etwa horizontalen Helldunkelgrenze (202, 204) und/oder in einem dunkleren Bereich neben einer etwa vertikalen Helldunkelgrenze erstreckt, in einer Blickrichtung entgegen der Lichtaustrittsrichtung (103) der Eindruck entsteht, dass das Hauptlichtmodul (105) und das Nebenlichtmodul (106) in etwa gleich hell leuchten.

2. Scheinwerfer (101) nach Anspruch 1, wobei das mindestens eine Nebenlichtmodul (106) ausgebildet ist, eine Hauptlichtfunktion in Form einer Streifen- oder Block-Fernlichtverteilung zu erzeugen, die in einem Fernbereich oberhalb der Helldunkelgrenze (202, 204) der abgeblendeten Hauptlichtfunktion des mindestens einen Hauptlichtmoduls (105) mindestens zwei individuell ansteuerbare und ausleuchtbare, in horizontaler Richtung nebeneinander angeordnete Streifen oder Blocksegmente aufweist.

3. Scheinwerfer (101) nach Anspruch 1 oder 2, wobei Lichtquellen (22; 30) zur Erzeugung der Hauptlichtfunktion und der Zusatzlichtfunktion des mindestens einen Nebenlichtmoduls (106) als Halbleiterlichtquellen, insbesondere als Leuchtdioden oder als Laserdioden, ausgebildet und auf einer gemeinsamen Platine (32) angeordnet sind.

4. Scheinwerfer (101) nach einem der vorhergehenden Ansprüche, wobei das mindestens eine Nebenlichtmodul (106) als ein Projektionsmodul mit mindestens einer abbildenden Sekundäroptik (34) ausgebildet ist, wobei Lichtaustrittsflächen von Lichtquellen (30) zur Erzeugung der Hauptlichtfunktion des mindestens einen Nebenlichtmoduls (106) oder Lichtaustrittsflächen (38) von den Lichtquellen (30) zugeordneten Primäroptiken (40) im Bereich einer Fokalebene (36) der mindestens einen Sekundäroptik (34) angeordnet sind.

5. Scheinwerfer (101) nach Anspruch 4, wobei die Sekundäroptik (34) des Nebenlichtmoduls (106) als eine Projektionslinse ausgebildet ist.

6. Scheinwerfer (101) nach Anspruch 5, wobei das Nebenlichtmodul (106) derart ausgebildet ist, dass die Hauptlichtfunktion und die Zusatzlichtfunktion jeweils eine Eintrittsfläche der Projektionslinse (34) vollständig ausleuchten.

7. Scheinwerfer (101) nach einem der Ansprüche 4 bis 6, wobei die Lichtaustrittsfläche (26) der Lichtleiterplatte (20) in der Fokalebene (36) der Sekundäroptik (34) angeordnet ist.

8. Scheinwerfer (101) nach einem der Ansprüche 4 bis 7, wobei die Sekundäroptik (34) zumindest bereichsweise Streustrukturen zum Streuen des abgebildeten Lichts in horizontaler und/oder vertikaler Richtung aufweist.

9. Scheinwerfer (101) nach einem der vorhergehenden Ansprüche, wobei das Nebenlichtmodul (106) Lichtquellen (22) zur Erzeugung der Zusatzlichtfunktion in geringerer Anzahl und/oder mit geringerer Leistung als Lichtquellen (30) zur Erzeugung der Hauptlichtfunktion aufweist.

10. Scheinwerfer (101) nach einem der vorhergehenden Ansprüche, wobei die Lichtaustrittsfläche (26) der Lichtleiterplatte (20) bezüglich einer Horizontalebene des Nebenlichtmoduls (106), welche die optische Achse (46) des Nebenlichtmodules (106) enthält, in einem geringen vertikalen Abstand angeordnet ist, vorzugsweise direkt unterhalb der Lichtquellen (30) zur Erzeugung der Hauptlichtfunktion.

11. Scheinwerfer (101) nach einem der vorhergehenden Ansprüche, wobei die Zusatzlichtfunktion des Nebenlichtmoduls (106) unabhängig von einer Aktivierung der abgeblendeten Hauptlichtverteilung des Hauptlichtmoduls (105) aktiv ist, wenn die Hauptlichtfunktion des Nebenlichtmoduls (106) aktiv ist.

12. Scheinwerfer (101) nach einem der vorhergehenden Ansprüche, wobei die Lichtaustrittsfläche (26) der Lichtleiterplatte (20) zumindest bereichsweise Streustrukturen zur horizontalen und/oder vertikalen Streuung des ausgekoppelten Lichts aufweist.

13. Scheinwerfer (101) nach einem der vorhergehenden Ansprüche, wobei das Nebenlichtmodul (106) derart ausgebildet ist, dass die Lichtstärke der Zusatzlichtfunktion zwischen 10 cd und 400 cd liegt.

14. Scheinwerfer (101) nach einem der vorhergehenden Ansprüche, wobei das Nebenlichtmodul (106) derart ausgebildet ist, dass die Lichtstärke der Zusatzlichtfunktion in Abhängigkeit von einer aktuell aktiven abgeblendeten Hauptlichtfunktion des mindestens einen Hauptlichtmoduls (105) automatisch einstellbar ist.

## Claims

1. Motor vehicle headlamp (101) comprising at least two light modules (105, 106), which is configured to generate at least one low beam light function in a light exit direction (103) of the headlamp (101)
wherein at least one main light module (105) is adapted to generate a low beam main light function with a substantially horizontal light/dark boundary (202, 204),
wherein at least one secondary light module (106) is adapted to generate two individually controllable light functions, namely a main light function and a less bright additional light function,
wherein, in order to generate the low beam light function of the headlamp (101), the low beam main light function of the at least one main light module (105) is activated and the main light function of the at least one secondary light module (106) is deactivated or is only activated in such a manner that the at least one secondary light module (106) appears darker to an observer than the at least one main light module (105) opposite to the light exit direction (103) of the headlamp (101) without activation of the additional light function of the at least one secondary light module (106),
wherein, when the low beam light function of the headlamp (101) is generated, the additional light function of the at least one secondary light module (106) is additionally activated, so that the at least one secondary light module (106) appears brighter to an observer opposite to the light exit direction (103) of the headlamp (101) than without the additional light function,
wherein the at least one secondary light module (106) for generating the additional light function comprises a light guide plate (20) into which at least one light source (22), which is not used for generating the main light function of the at least one secondary light module (106), couples light which propagates in the light guide plate (20) by means of total internal reflection, wherein the light guide plate (20) has decoupling elements (24) for coupling the propagating light out of the light guide plate (20) via a light exit surface (26) of the light guide plate (20), and
wherein the light coupled out of the light guide plate (20) illuminates a region (212) above the light/dark boundary (202, 204) of the low beam main light function of the at least one main light module (105),
**characterised in that**
the at least one main light module (105) is adapted to generate a low beam main light function in the form of a low beam light distribution, and
the at least one secondary light module (106) is adapted to generate a main light function in the form of a high beam light distribution,
wherein the auxiliary light function illuminates the secondary light module (106) so that an observer who is located in a glare-free zone in front of the motor vehicle, which zone extends above an upper, approximately horizontal light/dark boundary (202, 204) and/or in a darker region next to an approximately vertical light/dark boundary, has the impression, in a viewing direction opposite to the light exit direction (103), that the main light module (105) and the secondary light module (106) are illuminated with approximately the same brightness.

2. Headlamp (101) according to Claim 1, wherein the at least one secondary light module (106) is adapted to generate a main light function in the form of a strip or block main light distribution which has at least two individually controllable and illuminable strips or block segments arranged next to one another in the horizontal direction in a far range above the light/dark boundary (202, 204) of the low beam main light function of the at least one main light module (105).

3. Headlamp (101) according to claim 1 or 2, wherein light sources (22; 30) for generating the main light function and the additional light function of the at least one secondary light module (106) are designed as semiconductor light sources, in particular as light-emitting diodes or as laser diodes, and are arranged on a common circuit board (32).

4. Headlamp (101) according to one of the preceding claims, wherein the at least one secondary light module (106) is designed as a projection module with at least one imaging secondary optics (34), wherein light exit surfaces of light sources (30) for generating the main light function of the at least one secondary light module (106) or light exit surfaces (38) of primary optics (40) associated with the light sources (30) are arranged in the region of a focal plane (36) of the at least one secondary optics (34).

5. Headlamp (101) according to claim 4, wherein the secondary optics (34) of the secondary light module (106) is designed as a projection lens.

6. Headlamp (101) according to claim 5, wherein the secondary light module (106) is designed such that the main light function and the additional light function each fully illuminate an entrance surface of the projection lens (34).

7. Headlamp (101) according to any one of claims 4 to 6, wherein the light exit surface (26) of the light guide plate (20) is arranged in the focal plane (36) of the secondary optics (34).

8. Headlamp (101) according to any one of claims 4 to 7, wherein the secondary optics (34) has, at least in regions, scattering structures for scattering the imaged light in the horizontal and/or vertical direction.

9. Headlamp (101) according to one of the preceding claims, wherein the secondary light module (106) comprises light sources (22) for generating the additional light function in smaller number and/or with lower power than light sources (30) for generating the main light function.

10. Headlamp (101) according to any one of the preceding claims, wherein the light exit surface (26) of the light guide plate (20) is arranged at a small vertical distance with respect to a horizontal plane of the secondary light module (106), which comprises the optical axis (46) of the secondary light module (106), preferably directly below the light sources (30) for generating the main light function.

11. Headlamp (101) according to any of the preceding claims, wherein the auxiliary light function of the secondary light module (106) is active independently of an activation of the low beam main light distribution of the main light module (105) when the main light function of the secondary light module (106) is active.

12. Headlamp (101) according to one of the preceding claims, wherein the light exit surface (26) of the light guide plate (20) has, at least in regions, scattering structures for horizontal and/or vertical scattering of the light emitted.

13. Headlamp (101) according to one of the preceding claims, wherein the secondary light module (106) is designed in such a manner that the luminous intensity of the additional light function is between 10 cd and 400 cd.

14. Headlamp (101) according to one of the preceding claims, wherein the secondary light module (106) is designed in such a manner that the light intensity of the additional light function can be automatically adjusted as a function of a currently active low beam main light function of the at least one main light module (105).

## Revendications

1. Phare de véhicule à moteur (101) comprenant au moins deux modules d'éclairage (105, 106) et conçu pour produire au moins une fonction d'éclairage en feu de croisement dans une direction de sortie de lumière (103) du phare (101),
au moins un module d'éclairage principal (105) étant conçu pour produire une fonction d'éclairage principal en feu de croisement présentant une limite de clarté/obscurité (202, 204) essentiellement horizontale,
au moins un module d'éclairage secondaire (106) étant conçu pour produire deux fonctions d'éclairage pouvant être commandées de manière individuelle, à savoir une fonction d'éclairage principal et une fonction d'éclairage supplémentaire moins lumineux,
afin de produire la fonction d'éclairage en feu de croisement du phare (101), la fonction d'éclairage principal en feu de croisement dudit au moins un module d'éclairage principal (105) étant activée et la fonction d'éclairage principal dudit au moins un module d'éclairage secondaire (106) étant désactivée ou n'étant activée que de sorte que, sans activation de la fonction d'éclairage supplémentaire dudit au moins un module d'éclairage secondaire (106) et dans une direction opposée à la direction de sortie de lumière (103) du phare (101), ledit au moins un module d'éclairage secondaire (106) apparaisse plus sombre pour un observateur que ledit au moins un module d'éclairage principal (105),
lorsqu'est produite la fonction d'éclairage en feu de croisement du phare (101), la fonction d'éclairage supplémentaire dudit au moins un module d'éclairage secondaire (106) étant activée de manière supplémentaire, de sorte que, dans une direction opposée à la direction de sortie de lumière (103) du phare (101), ledit au moins un module d'éclairage secondaire (106) apparaisse plus lumineux pour un observateur que sans la fonction d'éclairage supplémentaire,
ledit au moins un module d'éclairage secondaire (106) permettant de produire la fonction d'éclairage supplémentaire comprenant une plaque de guidage de lumière (20) au sein de laquelledit au moins une source de lumière (22) ne servant pas à produire la fonction d'éclairage principal dudit au moins un module d'éclairage secondaire (106) injecte de la lumière qui se propage dans la plaque de guidage de lumière (20) par réflexion totale, la plaque de guidage de lumière (20) comprenant des éléments de découplage (24) permettant de découpler la lumière en cours de propagation issue de la plaque de guidage de lumière (20) par l'intermédiaire d'une surface de sortie de lumière (26) de la plaque de guidage de lumière (20), et
la lumière découplée issue de la plaque de guidage de lumière (20) éclairant une région (212) située au-dessus de la limite de clarté/obscurité (202, 204) de la fonction d'éclairage principal en feu de croisement dudit au moins un module d'éclairage principal (105),
**caractérisé en ce que**
ledit au moins un module d'éclairage principal (105) est conçu pour produire une fonction d'éclairage principal en feu de croisement sous la forme d'une répartition d'éclairage en feu de croisement, et
ledit au moins un module d'éclairage secondaire (106) est conçu pour produire une fonction d'éclairage principal sous la forme d'une répartition d'éclairage en feu de route,
la fonction d'éclairage supplémentaire éclairant le module d'éclairage secondaire (106) de sorte qu'une impression que le module d'éclairage principal (105) et le module d'éclairage secondaire (106) brillent à peu près avec la même luminosité soit produite pour un observateur qui se trouve devant le véhicule automobile dans une région sans éblouissement s'étendant au-dessus d'une limite supérieure à peu près horizontale de clarté/obscurité (202, 204) et/ou dans une région plus sombre située à côté d'une limite à peu près verticale de clarté/obscurité, dans une direction de vision opposée à la direction de sortie de lumière (103).

2. Phare (101) selon la revendication 1, ledit au moins un module d'éclairage secondaire (106) étant conçu pour produire une fonction d'éclairage principal sous la forme d'une répartition d'éclairage en feu de route en bandes ou en blocs qui comprend au moins deux bandes ou segments de blocs pouvant être commandé(e)s et éclairé(e)s de manière individuelle, agencé(e)s les un(e)s à côté des autres dans la direction horizontale, dans une région en feu de route située au-dessus de la limite de clarté/obscurité (202, 204) de la fonction d'éclairage principal en feu de croisement dudit au moins un module d'éclairage principal (105).

3. Phare (101) selon la revendication 1 ou 2, des sources de lumière (22 ; 30) permettant de produire la fonction d'éclairage principal et la fonction d'éclairage supplémentaire dudit au moins un module d'éclairage secondaire (106) étant réalisées sous la forme de sources de lumière à semiconducteurs, en particulier sous la forme de diodes électroluminescentes ou de diodes laser, et étant agencées sur une platine (32) commune.

4. Phare (101) selon l'une quelconque des revendications précédentes, ledit au moins un module d'éclairage secondaire (106) étant réalisé sous la forme d'un module de projection avec au moins une optique secondaire (34) de mise en forme, des surfaces de sortie de lumière de sources de lumière (30) permettant de produire la fonction d'éclairage principal dudit au moins un module d'éclairage secondaire (106) ou des surfaces de sortie de lumière (38) d'optiques primaires (40) associées aux sources de lumière (30) étant agencées dans la région d'un plan focal (36) de ladite au moins une optique secondaire (34).

5. Phare (101) selon la revendication 4, l'optique secondaire (34) du module d'éclairage secondaire (106) étant réalisée sous la forme d'une lentille de projection.

6. Phare (101) selon la revendication 5, le module d'éclairage secondaire (106) étant réalisé de telle manière que la fonction d'éclairage principal et la fonction d'éclairage supplémentaire éclairent respectivement et de manière complète une surface d'entrée de la lentille de projection (34).

7. Phare (101) selon l'une quelconque des revendications 4 à 6, la surface de sortie de lumière (26) de la plaque de guidage de lumière (20) étant agencée dans le plan focal (36) de l'optique secondaire (34).

8. Phare (101) selon l'une quelconque des revendications 4 à 7, l'optique secondaire (34) ayant au moins dans certaines régions des structures de diffusion permettant de diffuser dans une direction horizontale et/ou verticale la lumière mise en forme.

9. Phare (101) selon l'une quelconque des revendications précédentes, le module d'éclairage secondaire (106) comprenant des sources de lumière (22) permettant de produire la fonction d'éclairage supplémentaire en nombre inférieur et/ou avec une puissance inférieure à celle des sources de lumière (30) permettant de produire la fonction d'éclairage principal.

10. Phare (101) selon l'une quelconque des revendications précédentes, la surface de sortie de lumière (26) de la plaque de guidage de lumière (20) étant agencée à une faible distance verticale par rapport à un plan horizontal du module d'éclairage secondaire (106) contenant l'axe optique (46) du module d'éclairage secondaire (106), de manière préférée directement au-dessous des sources de lumière (30) permettant de produire la fonction d'éclairage principal.

11. Phare (101) selon l'une quelconque des revendications précédentes, la fonction d'éclairage supplémentaire du module d'éclairage secondaire (106) étant active indépendamment de l'activation de la répartition d'éclairage principal en feu de croisement du module d'éclairage principal (105) lorsque la fonction d'éclairage principal du module d'éclairage secondaire (106) est active.

12. Phare (101) selon l'une quelconque des revendications précédentes, la surface de sortie de lumière (26) de la plaque de guidage de lumière (20) comprenant au moins dans certaines régions des structures de diffusion permettant une diffusion horizontale et/ou verticale de la lumière découplée.

13. Phare (101) selon l'une quelconque des revendications précédentes, le module d'éclairage secondaire (106) étant réalisé de telle manière que l'intensité lumineuse de la fonction d'éclairage supplémentaire soit comprise entre 10 cd et 400 cd.

14. Phare (101) selon l'une quelconque des revendications précédentes, le module d'éclairage secondaire (106) étant réalisé de telle manière que l'intensité lumineuse de la fonction d'éclairage supplémentaire puisse être ajustée de manière automatique en fonction d'une fonction d'éclairage principal en feu de croisement actuellement active dudit au moins un module d'éclairage principal (105).
